(19) Europäisches Patentamt
European Patent Office
Office européen des brevets

(11) Veröffentlichungsnummer: **0 094 550**
**B1**

(12) # EUROPÄISCHE PATENTSCHRIFT

(45) Veröffentlichungstag der Patentschrift: **08.10.86**

(51) Int. Cl.⁴: **B 01 D 19/04**, C 09 D 7/12, B 01 D 19/00

(21) Anmeldenummer: **83104334.4**

(22) Anmeldetag: **03.05.83**

(54) **Mittel zum Entlüften von Beschichtungssystemen.**

(30) Priorität: **18.05.82 DE 3218676**

(43) Veröffentlichungstag der Anmeldung: **23.11.83 Patentblatt 83/47**

(45) Bekanntmachung des Hinweises auf die Patenterteilung: **08.10.86 Patentblatt 86/41**

(84) Benannte Vertragsstaaten: **BE FR GB IT NL**

(56) Entgegenhaltungen:
**DE - A - 1 444 555**
**DE - A - 1 519 411**
**DE - A - 1 795 557**
**DE - A - 2 040 560**
**DE - A - 3 123 103**
**DE - B - 1 962 039**

(73) Patentinhaber: **Th. Goldschmidt AG, Goldschmidtstrasse 100 Postfach 101461, D-4300 Essen 1 (DE)**

(72) Erfinder: **Fink, Hans-Ferdi, Brassertstrasse 46, D-4300 Essen (DE)**
Erfinder: **Klocker, Otto, Überruhrstrasse 420, D-4300 Essen (DE)**
Erfinder: **Koerner, Götz, Dr., Kantorie 126, D-4300 Essen (DE)**
Erfinder: **Künzel, Gert, Hartriegelstrasse 14, D-4030 Ratingen (DE)**
Erfinder: **Rossmy, Gerd, Dr., Im Hadkamp 18, D-4358 Haltern-Lavesum (DE)**
Erfinder: **Weitemeyer, Christian, Dr., Schellstrasse 50, D-4300 Essen (DE)**

EP 0 094 550 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Mittel zum Entlüften von Beschichtungssystemen, die aus wässriger Phase auf Oberflächen aufgebracht werden und polymere organische Filmbildner enthalten.

Beim Aufbringen von wasserverdünnbaren Beschichtungssystemen auf ein Substrat beobachtet man sehr häufig während oder nach dem Abdunsten des Wassers der Dispersion in dem sich bildenden, zusammenhängenden Beschichtungsfilm während dessen Trocknung die Ausbildung von sehr kleinen Gasblasen, die in dem Film feindispers verteilt sind. Ein Teil dieser Bläschen schwimmt zur Filmoberfläche auf, zerplatzt dort und verursacht keine Störungen, solange die Fliessfähigkeit des Filmes noch gross genug ist, um die Oberflächenstörung auszugleichen. Ein anderer Teil der Bläschen steigt zwar zur Oberfläche auf, platzt aber dort nicht mehr und bildet beim Erhärten des Bindemittelfilmes eine sehr dünne, mechanisch leicht zu beschädigende Oberflächenhaut. Andere Bläschen bleiben im Film verteilt. Derartige Störungen in einem Lackfilm werden als Nadelstiche oder «pin-holes» bezeichnet.

Die der Erfindung zugrunde liegende Aufgabe besteht darin, diese Luftbläschen in dem Beschichtungsfilm vor dessen Erhärten so zu mobilisieren, dass sie quantitativ zur Oberfläche des Filmes aufschwimmen, dort zerplatzen und verlaufen.

Das Phänomen dieses sogenannten Mikroschaumes ist nicht mit dem Verhalten und dem Erscheinungsbild eines üblichen, mehr oder weniger feinzelligen polyedrischen Schaumes zu vergleichen. Während die an sich bekannten Schaumbeseitigungs- oder Schaumverhütungsmittel die Lamellen, also die Trennwände zwischen den einzelnen Schaumblasen, zerstören oder deren stabile Ausbildung verhindern, sind bei den Mikroschäumen derartiger wasserverdünnbarer Beschichtungssysteme die einzelnen, meist kugelförmigen Gasbläschen soweit voneinander getrennt, dass sich zwischen den einzelnen Schaumkugeln keine Lamellen ausbilden. Aus diesem Grunde versagen auch die an sich bekannten Antischaummittel im Regelfall bei der Beseitigung und Entfernung des Mikroschaumes, die auch als Entlüftung bezeichnet wird. Weitere Hinweise auf das unterschiedliche Verhalten zwischen Kugelschaum und Polyederschaum sind in «Ullmanns Encyclopädie der technischen Chemie», Band 20, S. 441 ff., gegeben.

Es ist zwar bekannt, in Hydraulikölen, Schmierölen oder Beizflüssigkeiten eingeschlossene Luftbläschen durch Zusatz von Additiven zu entfernen. Derartige Additive sind in der DE-AS 2 305 257 beschrieben. Diese Additive versagen jedoch bei der Entfernung des Mikroschaumes aus wässrigen Zubereitungen.

Es ist zu vermuten, dass Vorgänge in der Grenzfläche Gasbläschen/Flüssigkeit die Entlüftung beeinflussen. Möglicherweise wird die Entlüftung durch die Veränderung der Viskosität des Beschichtungssystems in der Grenzfläche zum Glasbläschen beeinflusst. Jedenfalls ist es dem Fachmann aufgrund der unterschiedlichen physikalischen und/oder chemischen Beeinflussung der Grenzflächen zwischen Flüssigkeit und Gas nicht möglich, aus der Wirksamkeit von Antischaummitteln auf die Wirksamkeit von sogenannten Entlüftungsmitteln zu schliessen.

Der Erfindung liegt somit die Aufgabe zugrunde, wirksame Mittel zum Entlüften von Beschichtungssystemen zu finden, wobei die Beschichtungssysteme aus wässriger Phase auf Oberflächen aufgebracht werden und polymere organische Filmbildner enthalten. Es handelt sich deshalb insbesondere um Mittel zum Entlüften von wässrigen Zubereitungen filmbildender organischer Substanzen, die gegebenenfalls lösliche oder unlösliche Pigmente enthalten können. Die erfindungsgemässen Mittel sind somit insbesondere für Grundiermittel, Lacke, Finishe und ähnliche Überzugsmittel bestimmt.

Überraschenderweise wurde nun gefunden, dass man derartige Beschichtungssysteme hervorragend entlüften kann, wenn man ihnen ein Mittel zusetzt, welches ein lineares Polymerisat in wirksamen Mengen enthält, wobei das Polymerisat mindestens fünf seitenständig gebundene Gruppen aufweist, welche jeweils ein Siliciumatom enthalten, das über eine zweiwertige Kohlenwasserstoffgruppe mit dem Polymerisat verknüpft ist, und wobei das Siliciumatom mindestens eine Gruppe $R^1$ der Formel $O-[C_nH_{2n}O-]_xQ$ trägt, wobei n = 2 bis 8, x = 1 bis 10, Q ein Alkylrest mit 1 bis 18 Kohlenstoffatomen, ein Arylrest, ein Alkarylrest oder ein Acylrest mit 2 bis 18 Kohlenstoffatomen ist und die Summe der Kohlenstoff- und Sauerstoffatome der Gruppe $R^1 \geq 5$ ist.

Die als Entlüftungsmittel wirksamen Polymerisate haben somit eine typische Struktur, die man als Kammstruktur bezeichnen kann. An den linearen Kammrücken sind seitenständig mindestens 5 Gruppen gebunden. Die Wirksamkeit der Verbindungen ist vermutlich auf diese Struktur des polymeren Moleküls zurückzuführen.

Hieraus ergibt sich aber auch, dass es der Fachmann in der Hand hat, durch geeignete Auswahl und geeigneten Aufbau des die Seitengruppen tragenden linearen Polymerisats, also des Kammrückens, das Mittel der Struktur des Substrates anzupassen, welches entlüftet werden soll.

Die seitenständig an das lineare Polymerisat gebundenen Gruppen weisen jeweils ein Siliciumatom auf, welches über eine zweiwertige Kohlenwasserstoffgruppe an das lineare Polymerisat gebunden ist. Das Siliciumatom jeder Seitenkette trägt mindestens eine Gruppe $R^1$, die der Formel $O-[C_nH_{2n}O-]_xQ$ entspricht. Q ist ein Alkylrest mit 1 bis 18 Kohlenstoffatomen, ein Arylrest, ein Alkarylrest oder ein Acylrest mit 2 bis 18 Kohlenstoffatomen. Die Summe der Sauerstoff- und Kohlenstoffatome der Gruppe $O-[C_nH_{2n}O-]_xQ$ ist $\geq 5$. Beispiele für die Reste Q sind der Methyl-, Ethyl-, Propyl-, Isopropyl-, Butyl-, Isobutyl-, Decyl-, Dodecyl-, Oleyl-, Hexadecyl-, Phenyl-, Octylphenyl-, Nonylphenyl, Dodecylphenyl-, Acetyl- oder Isobutyroylrest.

Der Index n hat einen Wert von 2 bis 8, der Index x einen solchen von 1 bis 10.

Besonders bevorzugte Beispiele für die Gruppe $O-[C_nH_{2n}O-]_xQ$ sind die Reste

$O-[C_3H_6O-]_4C_6H_5$; $-OC_2H_4OC_2H_5$; $-OC_4H_8OCH_3$;

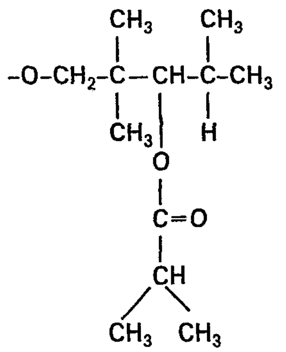

oder

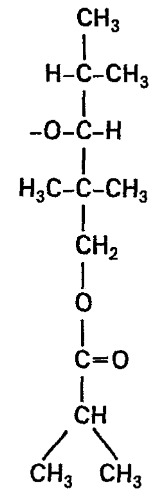

Besonders bevorzugt sind Mittel, die ein lineares Polymerisat enthalten, an welches seitenständig Struktureinheiten der Formel

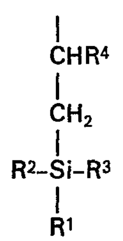

gebunden sind. $R^1$ hat dabei die oben angegebene Bedeutung. $R^2$ und $R^3$ können gleich oder verschieden sein und bedeuten einen $CH_3$- oder $C_2H_5$-Rest, einen niederen Alkoxyrest mit 1 bis 6 Kohlenstoffatomen oder den Rest $R^1$. Hat $R^2$ und/oder $R^3$ die Bedeutung eines niederen Alkoxyrestes, ist darauf zu achten, dass der Alkoxyrest in dem wässrigen Beschichtungssystem nicht hydrolysiert. Reagieren die Beschichtungssysteme in Wasser neutral, kann man ohne weiteres Alkoxyreste mit niedriger Anzahl von Kohlenstoffatomen im Alkoxyrest verwenden. Reagiert das Beschichtungssystem in wässriger Phase jedoch sauer, empfiehlt es sich, als Alkoxyreste solche mit 4 oder mehr Kohlenstoffatomen einzusetzen. $R^4$ ist ein Wasserstoff- oder Methylrest. Bevorzugt ist $R^4$ ein Wasserstoffrest.

Ähnlich wie man die linearen Polymerisate in ihrem Aufbau dem Aufbau der organischen Filmbildner anpassen kann, empfiehlt es sich, die seitenständigen Gruppen und insbesondere die $O-[C_nH_{2n}O-]_xQ$-Gruppe dem Beschichtungssystem anzugleichen, und zwar insbesondere dem Lösungsmittel, welches die Filmbildung der organischen Filmbildner gewährleistet. Wird z.B. als Lösungsmittel Phenylglykol verwendet, empfiehlt es sich, als Gruppe $O-[C_nH_{2n}O-]_xQ$ die der Struktur $-O-[C_3H_6O-]_4C_6H_5$ zu verwenden. Wird als filmbildendes Lösungsmittel Methoxybutanol verwendet, erweist sich als Gruppe $R^1$ besonders die Methoxybutoxygruppe geeignet.

Besonders bevorzugte Polymerisate, die in den Mitteln zum Entlüften als wirksame Substanzen enthalten sind, lassen sich durch die folgenden Formeln kennzeichnen.

So ist z.B. ein Polymerisat der Formel

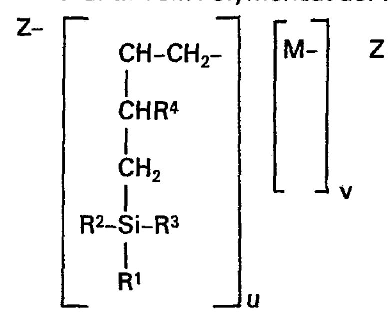

insbesondere zum Entlüften von Beschichtungssystemen auf Basis von Acrylatharzen geeignet. In der Formel haben $R^1$, $R^2$, $R^3$, $R^4$ die bereits angegebene Bedeutung. Z sind endbegrenzende Gruppen, welche auf die Wirksamkeit der Polymeren kaum Einfluss haben und durch die Art des Polymerisationsverfahrens bestimmt sind. Beispiele solcher Gruppen sind der Wasserstoff-; $C_1$ bis $C_5$-Alkyl- oder -Alkenyl-; Phenylrest. Die beiden Gruppen Z können gleich oder verschieden sein.

Die für den erfindungsgemässen Zweck wesentlichen Struktureinheiten sind diejenigen, die den Index u aufweisen. Definitionsgemäss ist $u \geq 5$.

Das lineare Polymerisat kann jedoch und wird in der Regel weitere kettenbildende Einheiten M aufweisen. Diese Einheiten M sind durch den Wert von v gegeben, wobei der Wert von v sich aus dem Quotienten

$$\frac{u}{v} \geq 0{,}4$$

ergibt. Der Quotient

$$\frac{u}{v}$$

hat vorzugsweise einen Wert von $\geq 8$.

Dies bedeutet, dass diejenigen linearen Polymerisate bevorzugt sind, bei denen die durch den Index u bezeichneten Struktureinheiten in überwiegender Anzahl enthalten sind.

Im Falle der Copolymerisation werden die verschiedenen Einheiten entsprechend ihrer Reaktivität statistisch verteilt sein. Beispiele für die Einheiten M sind

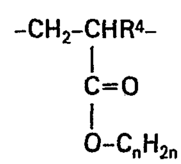

(n = 1 - 4);

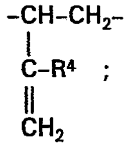

$-H_2C-CR^4=CH-CH_2-CH_2-$ (cis- oder trans-);

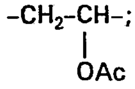 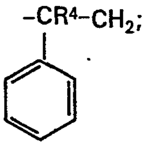 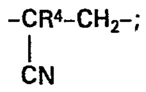

Verbindungen der vorgenannten Formel können in an sich bekannter Weise dadurch hergestellt werden, dass man zunächst Copolymere herstellt, welche die Formel

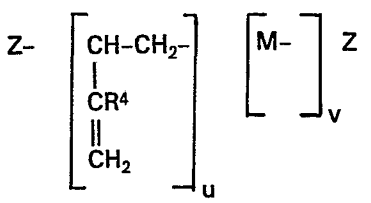 aufweisen.

Solche Polymere lassen sich in an sich bekannter Weise durch Polymerisation von z.B. 1,3-Butadien mit metallorganischen Katalysatoren, die Metalle wie z.B. Li, Na, Co, Mo, Ti, V oder Al einzeln oder im Gemisch enthalten, herstellen. Geeignete Verfahren sind z.B. in der DE-OS 2 933 609 und in Makromol, Chem. 16, S. 213, 1955, beschrieben.

An das Copolymere lagert man dann hydrosilylierend Wasserstoff-Chlorsilane an, z.B. $CH_3HSiCl_2$ oder $HSiCl_3$ oder $(CH_3)_2HSiCl$. Am Schluss lassen sich die Chloratome dann durch Veresterung mit den Verbindungen $HO[C_nH_{2n}O]_xQ$ allein oder im Gemisch mit niedermolekularen Alkoholen mit 1 bis 6 C-Atomen umsetzen, wobei dann die erfindungsgemäss als Entlüfter geeigneten Substanzen entstehen. Besonders geeignet sind Produkte auf Basis von Polybutadienen mit einem hohen Gehalt an Vinylgruppen, d.h.

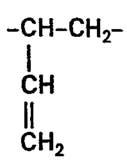 Gruppen.

Andere ebenfalls sehr gut geeignete lineare Polymerisate lassen sich durch die Formel

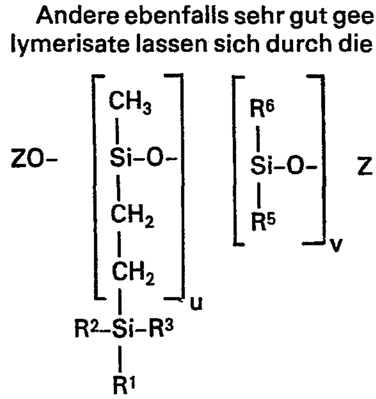

wiedergeben. Die Substituenten $R^1$, $R^2$, $R^3$ und die Indizes u und v haben die bereits angegebene Bedeutung bzw. den vorgenannten Wert. Die Substituenten $R^5$ und $R^6$ sind Alkylreste wie beispielsweise Methyl-, Ethyl-, Hexyl- oder Octadecylreste. Sie können Phenylreste sein, aber auch die Bedeutung des Wasserstoffrestes haben. In diesem Falle gilt jedoch die Einschränkung, dass nicht mehr als 10 Mol-% aller im polymeren Molekül enthaltenen Si-Atome einen Wasserstoffrest aufweisen dürfen und dass $R^5$ und $R^6$ nicht gleichzeitig die Bedeutung eines Wasserstoffrestes haben können. Bevorzugt sind $R^5$ und $R^6$ Methylreste. Die Reste Z sind wiederum endbegrenzende Gruppen und im allgemeinen Trimethylsilylreste. Die vorgenannten Verbindungen lassen sich in an sich bekannter Weise dadurch herstellen, dass man durch Äquilibrierung geeigneter Bausteine ein Siloxan der Formel

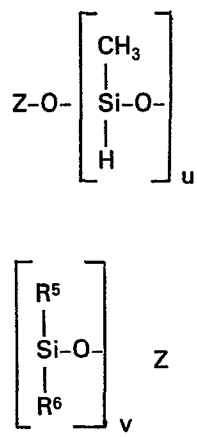 herstellt.

Darin ist Z vorzugsweise $(CH_3)_3Si-$ und $R^5$ und $R^6$ sind vorzugsweise $CH_3$. An dieses Siloxan lagert man dann hydrosilylierend Vinylsilane z.B.

$CH_2=CH-SiCl_3$;

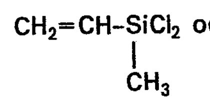 oder

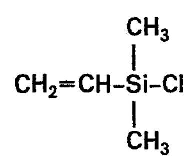 an.

Zum Schluss werden die Si-Cl-Gruppen wie bereits auf Seite 7 erläutert verestert, um zu den erfindungsgemäss zu verwendenden Produkten zu kommen.

Diese Verbindungen erniedrigen wie allgemein polymere siliciumorganische Verbindungen die Grenzflächenspannung in besonderer Weise. Sie eignen sich zur Entlüftung kohlenstofforganischer wie siliciumorganischer Beschichtungssysteme.

Eine weitere Gruppe wirksamer Verbindungen wird durch die Formel

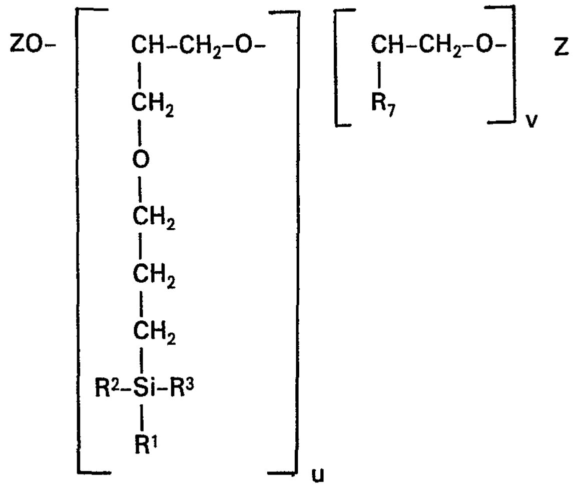

wiedergegeben. Die Substituenten $R^1$, $R^2$, $R^3$ und die Indizes u und v haben wieder die bereits angegebene Bedeutung oder den bereits angegebenen Wert. $R^7$ ist ein Wasserstoffrest oder ein Alkylrest mit 1 bis 18 Kohlenstoffatomen, vorzugsweise der Methylrest. $R^7$ kann auch die Bedeutung der Gruppe $-CH_2OCH_2CH{=}CH_2$ oder $-CH_2OR^8$ haben, wobei $R^8$ ein Alkylrest mit 1 bis 18 Kohlenstoffatomen oder ein Phenylrest ist. Z sind wiederum endbegrenzenden Gruppen, vorzugsweise niedere Alkylgruppen mit 1 bis 4 Kohlenstoffatomen oder Trimethylsilylgruppen. Die Verbindungen lassen sich in an sich bekannter Weise aus den entsprechenden Alkylenoxiden herstellen. Üblicherweise werden dabei Alkylenoxide der Formel

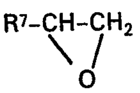

mit Allylglycidether unter Verwendung saurer oder alkalischer Katalysatoren copolymerisiert. Dabei entstehen Produkte der Formel

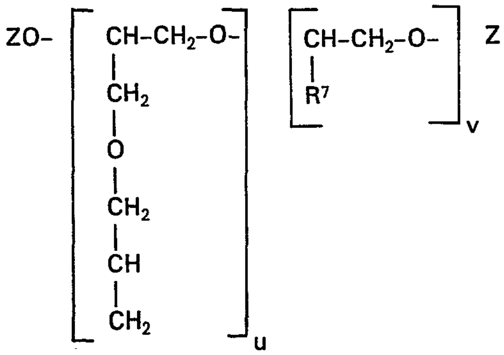

Die Gruppe Z resultiert aus dem verwendeten Startmolekül. Sie ist gleich H, wenn man als Starter ein Glykol der Formel

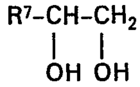

verwendet.

Setzt man als Starter einen einwertigen Alkohol, z.B. $C_4H_9OH$ ein, so besteht Z zu 50 Mol-% aus $C_4H_9$-Einheiten und zu 50 Mol-% aus H. OH-Gruppen im Molekül werden meist vor der Umsetzung mit Wasserstoffsilanen durch Veresterung oder Veretherung blockiert, z.B. trimethylsilyliert. Die Allylseitengruppen enthaltenden Polyether werden dann hydrosilylierend mit Wasserstoffchlorsilanen, z.B. $CH_3HSiCl_2$, $(CH_3)_2HSiCl$ oder $HSiCl_3$, umgesetzt. Zum Schluss werden die SiCl-Gruppen verestert, um zu den erfindungsgemäss zu verwendenden Verbindungen zu kommen.

Die erfindungsgemässen Mittel enthalten die vorgenannten Wirksubstanzen üblicherweise in organischen Lösungsmitteln gelöst. Es ist möglich, relativ hochkonzentrierte Zubereitungen herzustellen. So können die erfindungsgemässen Mittel zum Entlüften die linearen Seitenketten aufweisenden Polymerisate in Mengen von 5 bis 60 Gew.% enthalten. Die erfindungsgemässen Mittel können weitere Zusätze enthalten, welche den entlüftenden Effekt begünstigen. So hat sich als besonders vorteilhaft erwiesen, den erfindungsgemässen Mitteln hydrophobierte feinteilige Kieselsäure in Mengen von 2 bis 30 Gew.%, bezogen auf Zubereitung, zuzusetzen. Die feinteilige Kieselsäure soll dabei eine BET-Oberfläche von mindestens 50 $m^2/g$ haben. Die Hydrophobierung der feinteiligen Kieselsäure erfolgt zweckmässig in an sich bekannter Weise durch Silikonisieren.

Die erfindungsgemässen Mittel werden den wasserverdünnbaren Beschichtungssystemen in Mengen von 0,05 bis 1 Gew.%, bezogen auf Bindemittel, zugesetzt. Es ist dem Fachmann selbstverständlich, das verwendete Lösungsmittel, in welchem die linearen Polymerisate gelöst sind, den Lösungsmitteln, die in Beschichtungssystemen enthalten sind, anzupassen.

Die üblichen Lackeigenschaften, wie Härte, Glanz, Haftung auf dem Untergrund werden durch die erfindungsgemässen Entlüftungsmittel nicht beeinträchtigt.

In den folgenden Beispielen werden die Herstellung der in den erfindungsgemässen Mitteln enthaltenen Wirksubstanzen, die Konfektionierung der erfindungsgemässen Entlüftungsmittel und deren anwendungstechnische Eigenschaften gezeigt.

Beispiel 1

In einem mit einem Rührer, Rückflusskühler, Thermometer und Tropftrichter versehenen Reaktionsgefäss werden 2000 g 1.2-Polybutadien, welches ein auf den Vinylgruppengehalt bezogenes Äquivalentgewicht von 60,14 g aufweist und einer durchschnittlichen Formel von

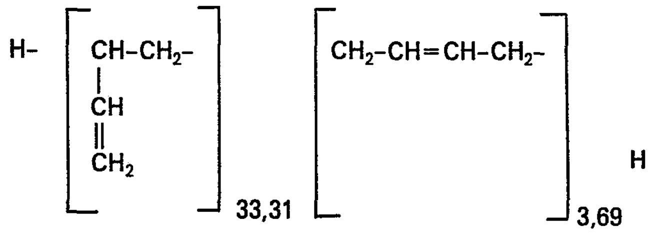

entspricht, in 6400 g Toluol gelöst. Diese Lösung wird unter Rühren auf 60°C erwärmt und bei dieser Temperatur mit 500 mg Hexachloroplatinsäure, gelöst in 4 ml Tetrahydrofuran (Katalysatorlösung), versetzt und auf 75°C aufgeheizt. Danach lässt man langsam 4208 g Methylhydrogendichlorsilan (d.s. 110% der zur Addition an die Vinylgruppen benötigten Menge) zufliessen. Die Zugabegeschwindigkeit wird so einreguliert, dass die Temperatur des Kolbeninhaltes nicht über 100°C steigt. Nach Beendigung der Silanzugabe wird das Reaktionsgut zur Vervollständigung des Umsatzes 1 Stunde lang bei 100°C gehalten. Danach wird das überschüssige Methylhydrogendichlorsilan und ein Teil des Toluols abdestilliert. Die Destillation ist beendet, wenn die Temperatur am Dampfübergang 110°C erreicht. Der restliche Kolbeninhalt wird abgekühlt und von der toluolischen Lösung des Reaktionsgutes der Festkörpergehalt und der Gehalt an hydrolysierbarem Chlor, ausgedrückt als Säurewert im mval je g Feststoff, bestimmt.

Die Lösung des Reaktionsproduktes hat einen Festgehalt von 44,1% und einen Säurewert von 11,15 mval/g, bezogen auf lösungsmittelfreies Produkt. Hieraus errechnet sich für den Feststoff ein Äquivalentgewicht von 89,69 g.

Zur Herstellung der erfindungsgemäss zu verwendenden Verbindungen der Formel

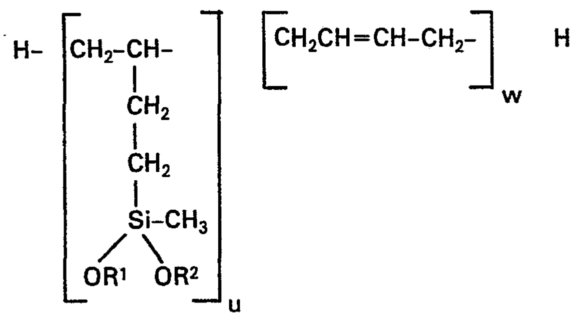

u = 33,31
w = 3,69
u : w = 9,027

werden jeweils 89,69 g Feststoff entsprechend 203,37 g der 44,1%igen Lösung des oben beschriebenen Methylhydrogendichlorsilan-Adduktes an 1.2-Polybutadien in ein mit Rührer, Thermometer, Rückflusskühler und Tropftrichter versehenes Reaktionsgefäss gegeben. Man lässt eine 20 gew.%ige Lösung des ROH in Toluol bei 70°C innerhalb von 1 Stunde zufliessen. Es werden jeweils 1,1 Äquivalente des Alkohols, entsprechend einem 10%igen Überschuss eingesetzt. Nachdem alles eingetropft ist, lässt man 1 Stunde bei 70°C nachreagieren, kühlt dann auf ca. 40°C ab und neutralisiert den im Reaktionsgut vorhandenen Chlorwasserstoff durch Eintropfen von Triethylamin bis zur alkalischen Reaktion. Nach dem Abkühlen auf Raumtemperatur wird das ausgefallene Triethylammoniumhydrochlorid abfiltriert und das Filtrat durch Destillation von Toluol befreit. Im Rückstand verbleiben die erfindungsgemässen Substanzen. In der folgenden Tabelle sind eine Reihe von nach diesem Verfahren hergestellten Polymeren zusammengestellt:

Tabelle 1

| Verbindung | $O-[C_nH_{2n}O]_xQ$ | = | |
|---|---|---|---|
| 1a | $-O-[C_3H_6O]_4-C_6H_5$ | | |
| 1b | $-O-[C_2H_4O]_1-C_6H_5$ | | |
| 1c | 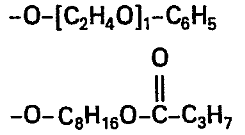 | $C_8H_{16}$ = | 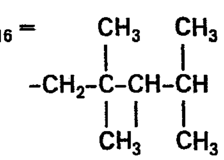 |
| 1d | $-OC_2H_4OC_2H_5$ | | |
| 1e | $-O-C_4H_8OCH_3$ | | |

Die in Tabelle 1 aufgeführten Polymeren 1a bis 1e werden in einem Weisslack, welcher aus einer Poly-Ethylacrylat-Dispersion hergestellt wird und eine Pigmentvolumenkonzentration von ca. 18% und einen Festgehalt von 48% aufweist, in einer Konzentration von 0,1 Gew.% eingearbeitet. Um das Einarbeiten der erfindungsgemässen Verbindungen zu erleichtern, werden zunächst 40 gew.%ige Lösungen der Verbindungen 1a bis 1e in einer Mischung aus gleichen Teilen Ethylglykol und Testbenzin hergestellt und diese Lösungen mit Hilfe eines Dissolvers in die Farbe eingearbeitet. 24 Stunden nach dem Einmischen werden 100 g der Farbe in einem 250 ml Becherglas mit einem Turbinenrührer bei 2000 UPM 1 Minute lang gerührt und die Farbe dann mit einer 200 µm Spiralrakel auf eine saubere, von Fettspuren befreite Glasplatte aufgetragen. Nachdem die Platten in einem staubfreien Raum getrocknet worden sind, wird die Platte von unten her mit einer starken Lichtquelle durchleuchtet und die Anzahl der als «Nadelstiche» bezeichneten, sehr feinen Löcher in einer Fläche von 100 cm² ausgezählt. Die Betrachtung des Films erfolgt zweckmässigerweise mit einer Lupe.

Das Ergebnis ist in folgender Tabelle 2 zusammengestellt. Die Zahlen sind Mittelwerte aus 3 unabhängig voneinander aufgebrachten Lackfilmen.

Tabelle 2

| Verbindung | Anzahl der Nadelstiche je 100 cm² |
|---|---|
| 1a | 4 |
| 1b | 7 |
| 1c | 12 |
| 1d | 4 |
| 1e | 10 |
| ohne Zusatz | einige hundert |

Beispiel 2

Die in Beispiel 1 beschriebenen Verbindungen werden vor dem Lösen in der Mischung aus gleichen Teilen Ethylglykol und Testbenzin mit einer hydrophobierten handelsüblichen Kieselsäure, welche eine spezifische Oberfläche von 150 m² aufweist und eine Primärteilchengrösse von ~15 nm besitzt, vermischt. Die Mischung besteht aus 85 Gew.-Teilen der Verbindungen 1a bis 1e und 15 Gew.-Teilen der hydrophoben Kieselsäure. Diese Gemische werden in der in Beispiel 1 beschriebenen Weise gelöst und dem weissen Lack zugefügt. Die Ausprüfung erfolgt ebenfalls in der in Beispiel 1 beschriebenen Weise. Das Ergebnis ist in Tabelle 3 zusammengefasst.

Tabelle 3

| Hydrophobe Kieselsäure enthaltende Zubereitungen der Verbindung | Anzahl der Nadelstiche je 100 cm² |
|---|---|
| 1a | 0 |
| 1b | 2 |
| 1c | 4 |
| 1d | 0 |
| 1e | 0 |
| ohne Zusatz | einige hundert |

Beispiel 3

In einem mit Rührer, Thermometer, Rückflusskühler und Tropftrichter versehenen Reaktionsgefäss werden 200 Gew.-Teile eines Polyallylglycidylethers der Formel

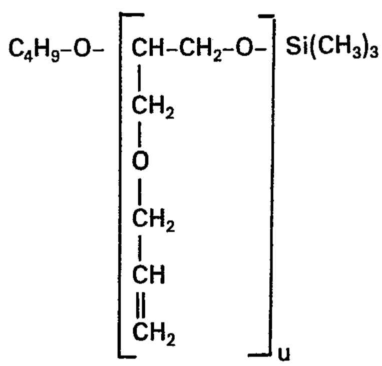

mit u = 28,20

in 400 Gew.-Teilen Toluol gelöst und unter Rühren auf 60°C aufgeheizt. Dann wird dem Ansatz eine Lösung von 400 mg Hexachloroplatinsäure in 4 ml Tetrahydrofuran zugefügt und 212,0 g Methyldichlorsilan (d.s. 110% der zur Addition an die Allygruppe benötigten Menge) zugetropft. Dabei wird der Kolbeninhalt auf 100°C erwärmt. Nach Beendigung der Silanzugabe wird das Reaktionsgut zur Vervollständigung der Reaktion 1 Stunde lang bei 100°C gehalten. Danach wird das überschüssige Methylhydrogendichlorsilan und ein Teil des Toluols abdestilliert. Die Destillation wird beendet, wenn die Temperatur am Dampfübergang 110°C erreicht hat. Das im Reaktionsgefäss verbliebene, in Toluol gelöste Addukt hat einen Festkörpergehalt von 52,2 Gew.% und einen Säurewert von 8,48 mval/g, bezogen auf lösungsmittelfreies Produkt. Daraus errechnet sich ein Allylgruppenumsatz von 99,4%. Aus diesem Wert ergibt sich eine mittlere Formel von

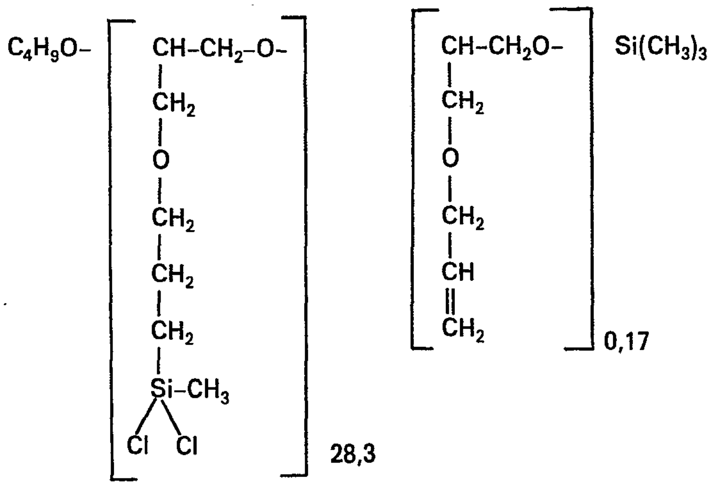

mit $u = 28{,}03$
$w = 0{,}17$
$\frac{u}{w} = 164{,}88$

Zur Herstellung der erfindungsgemässen Verbindungen der Formel

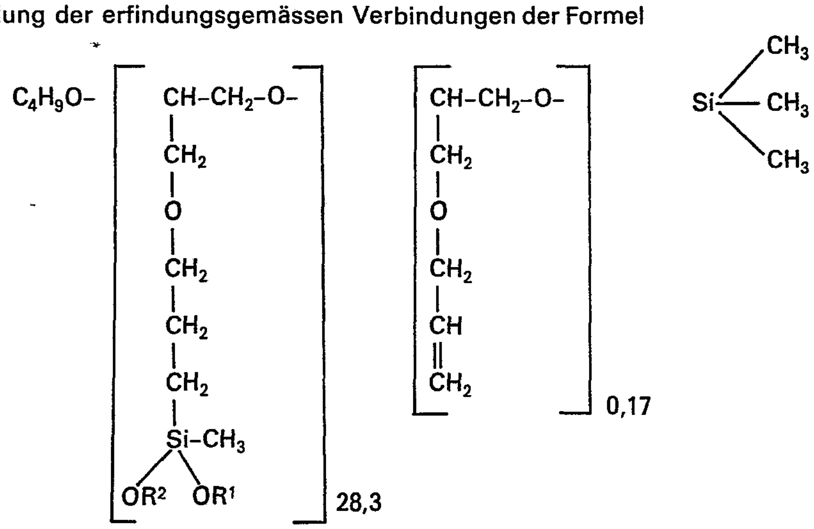

werden 117,9 Gew.-Teile des in oben beschriebener Weise hergestellten Methylhydrogendichlorsilan-Adduktes bzw. 226,0 Gew.-Teile der 52,2 gew.%igen Lösung in Toluol in einem Reaktionsgefäss, welches mit einem Rührer, Thermometer, Rückflusskühler und Tropftrichter versehen ist, vorgelegt und auf 70°C aufgeheizt. Dann lässt man eine Lösung aus 359,0 Gew.-Teilen $C_6H_5$–$[OC_3H_6$–$]_4OH$, das entspricht 110% des theoretischen Bedarfs, in 500 g Toluol zufliessen. Nachdem alles eingetropft ist, lässt man 1 Stunde bei 70°C nachreagieren, kühlt dann auf 40°C ab und neutralisiert den im Reaktionsgut verbliebenen Chlorwasserstoff durch Eintropfen von Triethylamin bis zur alkalischen Reaktion. Danach wird auf Raumtemperatur abgekühlt und das ausgefallene Triethylammoniumhydrochlorid abfiltriert und das Filtrat durch Destillation vom Toluol befreit.

Der Rückstand wird in der in Beispiel 1 beschriebenen Weise überprüft. In 100 cm² des Lackfilms sind keine Nadelstiche feststellbar.

Beispiel 4

In einem mit Rührer, Thermometer, Rückflusskühler und Tropftrichter versehenen Reaktionsgefäss werden 1000 g eines α-ω-Trimethylsilylpolymethylhydrogen-siloxans der Formel

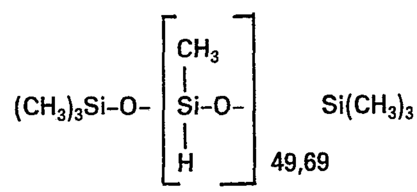

in 2250 g Toluol gelöst und auf 90°C erwärmt. Dann gibt man 200 mg Hexachloroplatinsäure, welche in 4 ml Tetrahydrofuran gelöst ist, hinzu und lässt innerhalb von 1 Stunde 2448 g Methylvinyldichlorsilan (d.s. 110% der zur Addition an die SiH-Gruppen benötigten Menge) zufliessen. Während der Zugabe des Silans steigt die Temperatur auf 108°C an. Nachdem alles eingeflossen ist, lässt man 1 Stunde bei Rückflusstemperatur nachreagieren. Dann wird das überschüssige Methylvinyldichlorsilan und ein Teil des Toluols abdestilliert, bis insgesamt ca. 1700 g Destillat abgetrennt sind. Das im Reaktionsgefäss verbliebene, in Toluol gelöste Addukt hat einen Feststoffgehalt von 80,9 Gew.% und einen auf lösungsmittelfreies Produkt bezogenen Säurewert von 9,77 mval/g. Das entspricht einer praktisch kompletten Addition der eingesetzten SiH-Menge an Methylvinyldichlorsilan. Der entstandenen

Verbindung kann demnach die folgende mittlere Formel zugeschrieben werden

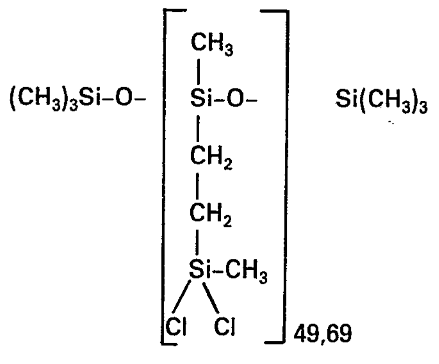

Aus dem Säurewert errechnet sich für den Feststoff ein Äquivalentgewicht von 102,35 g.

Zur Herstellung der erfindungsgemässen Verbindungen der allgemeinen Formel

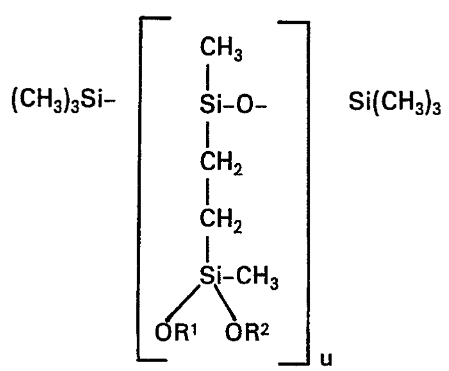

werden jeweils 156,4 Gew.-Teile der 80,9%igen toluolischen Lösung des oben beschriebenen Adduktes, das entspricht einem Si-Cl-Äquivalent in der in Beispiel 1 beschriebenen Weise mit HO-Gruppen tragenden Verbindungen, umgesetzt.

In der Tabelle 4 sind eine Reihe der nach diesem Verfahren hergestellten Polymeren zusammengestellt.

Tabelle 4

| Verbindung | $OR^1 = OR^2$ |
|---|---|
| 4a | $-O[C_3H_6O]_4C_6H_5$ |
| 4b | $-OC_2H_4-OC_2H_5$ |
| 4c | $-O-C_4H_8-OCH_3$ |

Die in Tabelle 4 aufgeführten Polymeren 4a–4c werden in der in Beispiel 1 beschriebenen Weise auf ihre entlüftende Wirkung untersucht.

Das Ergebnis gibt Tabelle 5 wieder.

Tabelle 5

| Verbindung | Anzahl der Nadelstiche je 100 $cm^2$ |
|---|---|
| 4a | 2 |
| 4b | 6 |
| 4c | 4 |
| ohne Zusatz | einige hundert |

Vergleichsbeispiel (analog DE-AS 2 305 257)

In dem in Beispiel 1 beschriebenen Weisslack werden jeweils 0,1 Gew.% der folgenden Verbindungen in Form einer 40%igen Lösung in einer Mischung aus gleichen Teilen Ethylglykol und Testbenzin eingebracht.

Verbindung A

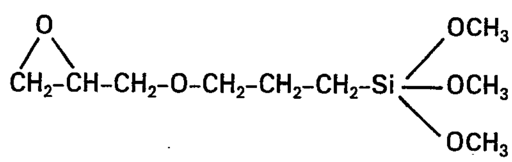

Verbindung B

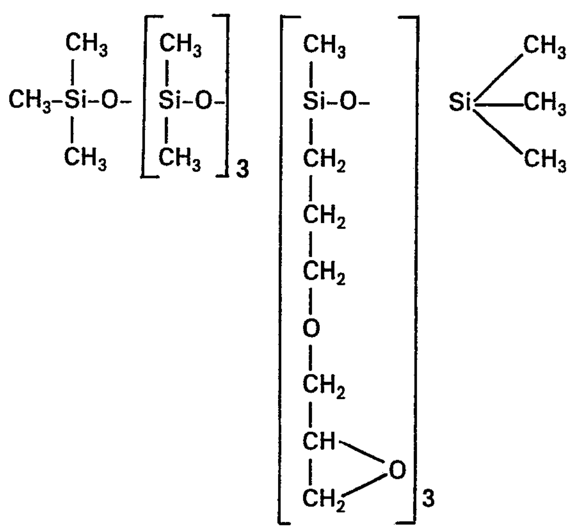

Die Lacke werden dann in der in Beispiel 1 beschriebenen Weise ausgeprüft und mit einem additivfreien Lackfilm verglichen. Die Zahl der Nadelstiche pro 100 $cm^2$ ist in allen drei Proben in etwa gleich. Eine entlüftende Wirkung ist nicht feststellbar.

**Patentansprüche**

1. Mittel zum Entlüften von Beschichtungssystemen, wobei die Beschichtungssysteme aus wässriger Phase auf Oberflächen aufgebracht werden und polymere organische Filmbildner enthalten, dadurch gekennzeichnet, dass es ein lineares Polymerisat in wirksamen Mengen enthält, wobei das Polymerisat mindestens fünf seitenständig gebundene Gruppen aufweist, welche jeweils ein Siliciumaton enthalten, das über eine zweiwertige Kohlenwasserstoffgruppe mit dem Polymerisat verknüpft ist, und wobei das Siliciumatom mindestens eine Gruppe $R^1$ der Formel $O-[C_nH_{2n}O-]_xQ$ trägt, wobei $n = 2$ bis 8, $x = 1$ bis 10, Q ein Alkylrest mit 1 bis 18 Kohlenstoffatomen, ein Arylrest, ein Alkarylrest oder ein Acylrest mit 2 bis 18 Kohlenstoffatomen ist und die Summe der Kohlenstoff- und Sauerstoffatome der Gruppe $R^1 \geq 5$ ist.

2. Mittel nach Anspruch 1, dadurch gekennzeichnet, dass es ein lineares Polymerisat enthält, an welches seitenständig Struktureinheiten der Formel

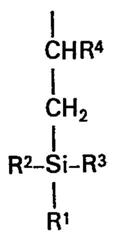

gebunden sind, wobei $R^1$ die oben angegebene Bedeutung hat, $R^2$ und $R^3$ gleich oder verschieden sind und einen $CH_3$- oder $C_2H_5$-Rest, einen niederen Alkoxyrest mit 1 bis 6 Kohlenstoffatomen oder den Rest $R^1$ bedeuten, und $R^4$ ein Wasserstoff- oder Methylrest ist.

3. Mittel nach Anspruch 1 oder 2, dadurch gekennzeichnet, dass es als lineares Polymerisat ein solches der Formel

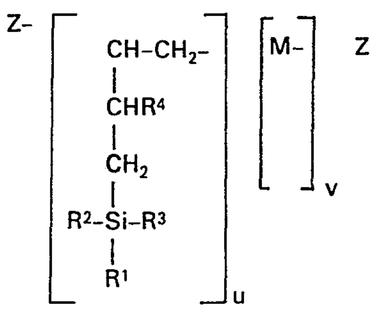

enthält, worin $R^1$, $R^2$, $R^3$ und $R^4$ die oben angegebene Bedeutung haben, M eine kettenbildende Monomereinheit ist, Z endbegrenzende Gruppen sind, $u \geq 5$ ist und der Quotient

$\frac{u}{v} \geq 0,4$ ist.

4. Mittel nach Anspruch 1 oder 2, dadurch gekennzeichnet, dass es als lineares Polymerisat ein solches der Formel

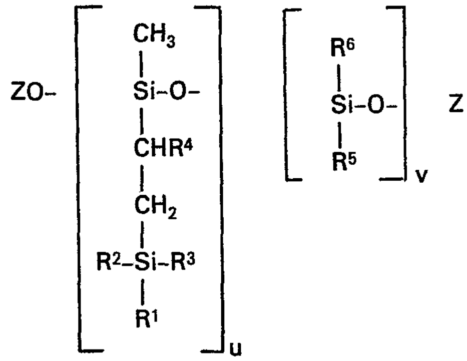

enthält, wobei $R^1$, $R^2$, $R^3$, $R^4$, Z, u und $\frac{u}{v}$ wie oben definiert sind, $R^5$ und $R^6$ gleich oder verschieden sind und einen Alkyl-, Phenyl- oder Wasserstoffrest bedeuten, wobei nicht mehr als 10 Mol-% aller Siliciumatome eine SiH-Gruppe enthalten dürfen und $R^5$ und $R^6$ nicht gleichzeitig die Bedeutung eines Wasserstoffrestes haben.

5. Mittel nach Anspruch 1 oder 2, dadurch gekennzeichnet, dass es als lineares Polymerisat ein solches der Formel

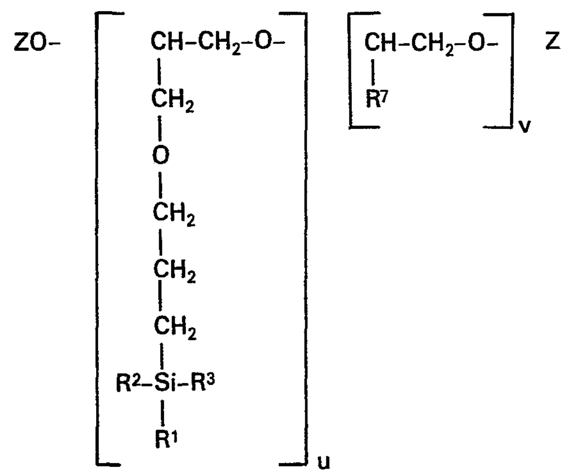

enthält, wobei $R^1$, $R^2$, $R^3$, Z, u und $\frac{u}{v}$ die oben angegebene Bedeutung haben, $R^7$ ein Wasserstoff- oder Alkylrest mit 1 bis 18 Kohlenstoffatomen oder die Gruppe $-CH_2OCH_2CH=CH_2$ oder $-CH_2OR^8$ bedeutet, wobei $R^8$ ein Alkylrest mit 1 bis 18 Kohlenstoffatomen oder ein Phenylrest ist.

6. Mittel nach einem oder mehreren der Ansprüche 1 bis 5, dadurch gekennzeichnet, dass es zusätzlich in Mengen bis zu 30 Gew.%, bezogen auf die Zubereitung hydrophobiertes feinteiliges Siliciumoxid einer BET-Oberfläche von mindestens 50 $m^2/g$, enthält.

**Claims**

1. Agent for deaerating coating systems, the coating systems being applied to surfaces from an aqueous phase and containing organic film formers, characterized in that it contains a linear polymer in effective quantities, the polymer having at least five side groups which each contain a silicon atom linked to the polymer by a bivalent

hydrocarbon group, and the silicon atom carrying at least one group $R^1$ of the formula $O-[C_nH_{2n}-O-]_xQ$, where n = 2 to 8, x = 1 to 10, Q is an alkyl radical having 1 to 18 carbon atoms, an aryl radical, an alkaryl radical or an acyl radical having 2 to 18 carbon atoms, and the sum of the carbon and oxygen atoms of the group $R^1$ is $\geqq 5$.

2. Agent according to Claim 1, characterized in that it contains a linear polymer, to the side of which structural units of the formula

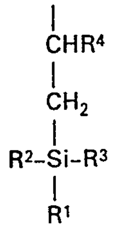

are bonded, wherein $R^1$ has the meaning given above, $R^2$ and $R^3$ are identical or different and represent a $CH_3$ or $C_2H_5$ radical, a lower alkoxy radical having 1 to 6 carbon atoms or the radical $R^1$, and $R^4$ is a hydrogen or methyl radical.

3. Agent according to Claim 1 or 2, characterized in that as a linear polymer, it contains a polymer of the formula

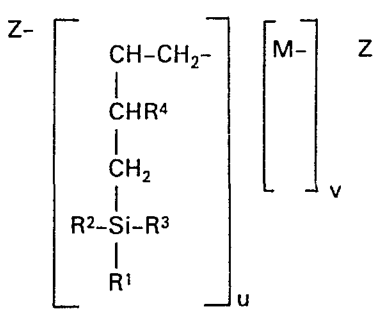

wherein $R^1$, $R^2$ $R^3$ and $R^4$ have the meanings given above, M is a chain-forming monomer unit, the Z are terminal groups, u is $\geqq 5$, and the quotient

$\frac{u}{v}$ is $\geqq 0.4$.

4. Agent according to Claim 1 or 2, characterized in that, as the linear polymer, it contains a polymer of the formula

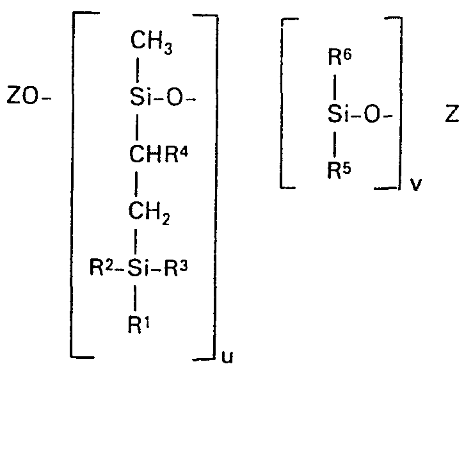

wherein $R^1$, $R^2$, $R^3$, $R^4$, Z, u and $\frac{u}{v}$ are as defined above, $R^5$ and $R^6$ are identical or different and represent an alkyl, phenyl or hydrogen radical, and wherein not more than 10 mol% of all the silicon atoms may contain a SiH group, and $R^5$ and $R^6$ do not simultaneously have the meaning of a hydrogen radical.

5. Agent according to Claim 1 or 2, characterized in that, as the linear polymer, it contains a polymer of the formula

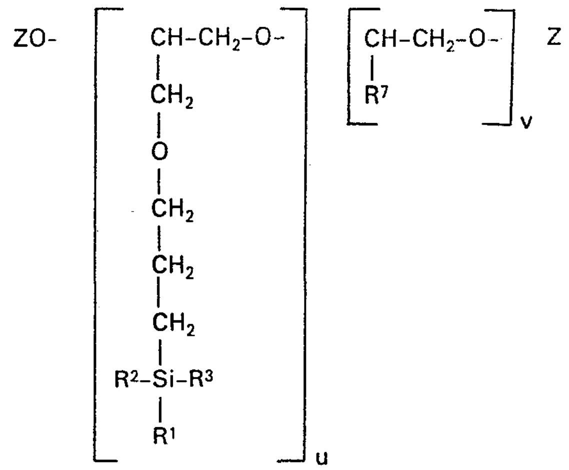

have the meanings given above and $R^7$ represents hydrogen or an alkyl radical having 1 to 18 carbon atoms or the group $-CH_2-OCH_2CH=CH_2$ or $-CH_2OR^8$, $R^8$ being an alkyl radical having 1 to 18 carbon atoms or a phenyl radical.

6. Agent according to one or more of Claims 1 to 5, characterized in that it additionally contains, in quantities of up to 30% by weight relative to the preparation, finely disperse silica which has been rendered hydrophobic and has a BET surface area of at least 50 $m^2/g$.

**Revendications**

1. Produit pour la désaération de systèmes de revêtement, où les systèmes de revêtement sont appliqués sur des surfaces à partir d'une phase aqueuse et contiennent des substances feuillogènes organiques polymères, caractérisé en ce qu'il contient un polymère linéaire en des quantités efficaces, le polymère contenant au moins cinq groupes fixés en position latérale, dont chacun contient un atome de silicium, lequel est relié au polymère par l'intermédiaire d'un groupe hydrocarboné bivalent, l'atome de silicium portant au moins un groupe $R^1$ de formule $O-(C_nH_{2n}O-)_xQ$ où n = 2 à 8, x = 1 à 10, Q est un radical alkyle ayant de 1 à 18 atomes de carbone, un radical aryle, un radical alkaryle ou un radical acyle ayant de 2 à 18 atomes de carbone, le nombre total des atomes de carbone et d'oxygène du groupe $R^1$ étant $\geqq 5$.

2. Produit selon la revendication 1, caractérisé en ce qu'il contient un polymère linéaire auquel sont fixés en position latérale des motifs structuraux de formule

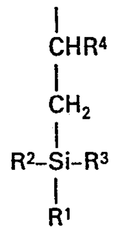

dans laquelle $R^1$ a la signification donnée ci-dessus, $R^2$ et $R^3$ sont identiques ou différents et représentent un radical $CH_3$- ou $C_2H_5$-, un radical alcoxy inférieur ayant de 1 à 6 atomes de carbone ou le radical $R^1$, et $R^4$ est un radical hydrogène ou méthyle.

3. Produit selon la revendication 1 ou 2, caractérisé en ce qu'il contient comme polymère linéaire un polymère de formule

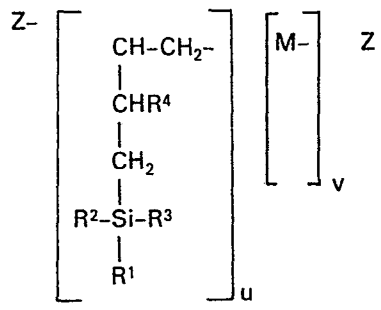

dans laquelle $R^1$, $R^2$, $R^3$ et $R^4$ ont la signification donnée ci-dessus, M est un motif monomère générateur de chaîne, Z représente des groupes terminaux, $u \geq 5$, et le quotient $\frac{u}{v} \geq 0,4$.

4. Produit selon la revendication 1 ou 2, caractérisé en ce qu'il contient comme polymère linéaire un polymère de formule

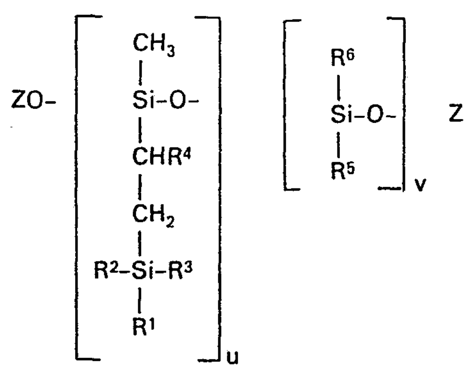

dans laquelle $R^1$, $R^2$, $R^3$, $R^4$, Z, u et $\frac{u}{v}$ sont définis comme ci-dessus, $R^5$ et $R^6$ sont identiques ou différents et représentent un radical alkyle, phényle ou hydrogène, au plus 10% en moles de tous les atomes de silicium pouvant contenir un groupe SiH, et $R^5$ et $R^6$ ne signifiant pas simultanément un radical hydrogène.

5. Produit selon la revendication 1 ou 2, caractérisé en ce qu'il contient comme polymère linéaire un polymère de formule

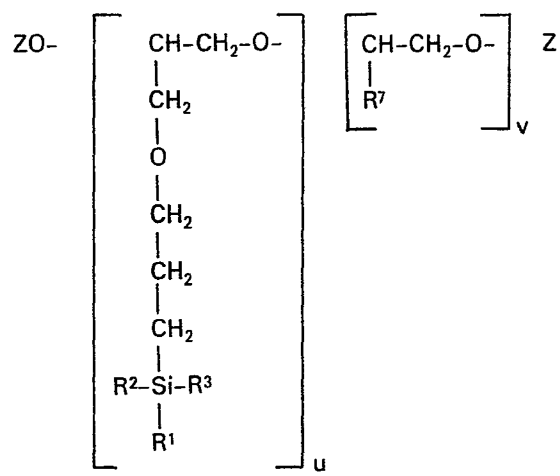

dans laquelle $R^1$, $R^2$, $R^3$, $R^4$, Z, u et $\frac{u}{v}$ ont les significations données ci-dessus, $R^7$ est un radical hydrogène ou alkyle ayant de 1 à 8 atomes de carbone, ou le groupe $-CH_2OCH_2CH=CH_2$ ou $-CH_2OR^8$, $R^8$ étant un radical alkyle ayant de 1 à 18 atomes de carbone, ou un radical phényle.

6. Produit selon l'une ou plusieurs des revendications 1 à 5, caractérisé en ce qu'il contient en outre, à des concentrations allant jusqu'à 30% en poids par rapport à la préparation, de l'oxyde de silicium hydrofugé finement divisé ayant une aire BET d'au moins 50 $m^2/g$.